# FASCICULE DE BREVET EUROPEEN

(11) **EP 3 432 117 B1**
(45) Date de publication et mention de la délivrance du brevet: **08.07.2020**
(21) Numéro de dépôt: 18186837.3
(22) Date de dépôt: 12.11.2014
(51) Int. Cl.: G06F 1/16, G06F 3/044

(54) **DISPOSITIF ACCESSOIRE COUVRANT POUR UN APPAREIL PORTABLE ÉLECTRONIQUE ET/OU INFORMATIQUE, ET APPAREIL ÉQUIPÉ D'UN TEL DISPOSITIF ACCESSOIRE**
ABDECK-ZUBEHÖRVORRICHTUNG FÜR EIN TRAGBARES ELEKTRONISCHES UND/ODER IT-GERÄT, UND GERÄT, DAS MIT EINER SOLCHEN ZUBEHÖRVORRICHTUNG AUSGESTATTET IST
COVERING ACCESSORY DEVICE FOR A PORTABLE ELECTRONIC AND/OR COMPUTER APPARATUS, AND APPARATUS EQUIPPED WITH SUCH AN ACCESSORY DEVICE

(30) Priorité: 19.11.2013 FR 1361330
(43) Date de publication de la demande: 23.01.2019
(62) Demande divisionnaire de: 14805200.4
(73) Titulaire: QuickStep Technologies LLC, Wilmington, DE 19801 (US)
(72) Inventeur: ROZIERE, Didier, 30900 Nîmes (FR)
(74) Mandataire: Lang, Johannes

(56) Documents cités:
- EP-A2- 2 207 076
- WO-A1-01/28189
- WO-A1-2011/015794
- "PERSONAL COMMUNICATOR CONFIGURATIONS", IBM TECHNICAL DISCLOSURE BULLETIN, INTERNATIONAL BUSINESS MACHINES CORP. (THORNWOOD), US, vol. 37, no. 6A, 1 juin 1994 (1994-06-01), pages 449-453, XP000455841, ISSN: 0018-8689

## Description

### Domaine technique

La présente invention concerne un dispositif accessoire couvrant pour un appareil portable électronique et/ou informatique, procurant une fonction de détection d'un objet de commande. Elle concerne également un appareil portable électronique et/ou informatique muni d'un tel dispositif accessoire.

Le domaine de l'invention est plus particulièrement, mais de manière non limitative, celui des interfaces homme machine sans contact, mettant en œuvre une technologie de détection capacitive, et encore plus particulièrement une technologie de détection capacitive mettant en œuvre un plan de garde des électrodes capacitives.

### Etat de la technique

Il existe actuellement sur le marché de nombreux accessoires visant à couvrir des appareils portables électroniques et/ou informatiques, tels que des microordinateurs portables, des tablettes numériques ou des Smartphones. Ces accessoires ont généralement une fonction de protection contre les chocs et les rayures, ainsi qu'une fonction esthétique et de personnalisation. Ces accessoires peuvent présenter des formes diverses : étuis, pochettes, housses, enveloppes souples ou rigides, coques.

Certains de ces accessoires possèdent un volet rabattable prévu pour recouvrir l'écran, et éventuellement le clavier, des appareils portables. Ce volet protège la face avant de l'appareil portable lorsqu'il est rabattu sur celle-ci et son ouverture libère les fonctions d'écran et de commande.

Par ailleurs, de plus en plus d'appareils portables, tels que les tablettes et les Smartphones, sont équipés d'un écran tactile et apportent des fonctions d'Interface Homme Machine (IHM). Ces appareils utilisent comme interface des dalles tactiles transparentes sur les écrans, et opaques au niveau d'une surface de commande disposée en périphérie de l'écran. La plupart de ces dalles utilisent la technologie capacitive. Cette technologie permet de détecter un ou plusieurs objets de commande (doigts, stylet...) en contact ou à distance de la surface de commande, et mettent en œuvre la technologie capacitive décrite dans les brevets FR 2 893 711 ou FR 2 949 007, ou encore dans la demande de brevet FR 2 971 066 A1**,** déposés par la Demanderesse.

Cependant, la fonctionnalité de détection est actuellement limitée à l'appareil électronique/informatique. Lorsque ce dernier est muni d'un dispositif accessoire comprenant une partie mobile, tel que par exemple une housse de protection rabattable, il est nécessaire d'abord de manipuler la housse de protection pour laisser accès à la surface de commande puis de commencer à interagir avec l'appareil.

De plus les dispositifs accessoires, de type housses de protection à volet rabattable, sont actuellement utilisés pour remplir une unique fonction qui est la protection de l'appareil.

Un but de la présente invention est de pallier les inconvénients précités.

Un autre but de la présente invention est de proposer un dispositif accessoire de protection pour un appareil informatique/électronique apportant plus de fonctionnalités que les dispositifs accessoires actuellement connus.

Encore un autre but de la présente invention est de proposer un dispositif accessoire de protection pour un appareil informatique/électronique contribuant, voire améliorant les fonctionnalités de détection d'un tel appareil.

Enfin, il est un but de la présente invention de proposer un dispositif accessoire de protection pour un appareil informatique/électronique permettant une interaction plus rapide et nécessitant moins de manipulation avec ledit appareil.

Document WO 01/28189 A1 expose un dispositif électronique portable.

### Exposé de l'invention

L'invention propose d'atteindre au moins un des buts précités par un dispositif pour appareil portable électronique et/ou informatique, dit appareil utilisateur, ledit dispositif comprenant une partie rabattable pour couvrir au moins une partie dudit appareil utilisateur lorsqu'elle est rabattue sur ledit appareil utilisateur, **caractérisé en ce que** ladite partie rabattable comprend au moins deux couches de détection, chacune gardée à un potentiel de garde et comprenant au moins une, préférentiellement plusieurs, électrode(s) de détection capacitive :
- une première desdites couches étant agencée pour réaliser une fonction de détection capacitive d'au moins un objet de commande se trouvant d'un côté de ladite partie rabattable, en particulier du côté de la face intérieure de ladite partie rabattable se trouvant du côté dudit appareil utilisateur lorsqu'elle est rabattue sur ledit appareil utilisateur ;
- une deuxième desdites couches étant agencée pour réaliser une fonction de détection capacitive d'au moins un objet de commande se trouvant de l'autre côté de ladite partie rabattable, en particulier du côté de la face extérieure de ladite partie rabattable lorsqu'elle est rabattue sur ledit appareil utilisateur ;
en vue de déclencher une fonction dans ledit l'appareil utilisateur.

Ainsi, on dispose d'un dispositif, et plus précisément un dispositif accessoire, permettant de réaliser une fonction de détection capacitive pour un appareil portable tout en assurant une fonction de couverture amovible de protection. On obtient de cette façon un équipement compact et opérationnel quelle que soit la position effective de la partie rabattable. Par conséquent, le dispositif selon l'invention apporte plus de fonctionnalités que les dispositifs accessoires de l'état de la technique qui assurent uniquement une fonction de protection de l'appareil utilisateur.

De plus, avec le dispositif selon l'invention, il est possible de détecter un objet de commande même lorsque la partie rabattable du dispositif est rabattue sur l'appareil, et de déclencher une fonction réalisée par l'appareil utilisateur. Ainsi, il est possible d'interagir avec l'appareil utilisateur sans avoir à manipuler la partie rabattable du dispositif, ce qui permet une interaction plus rapide et avec moins de manipulation pour l'utilisateur.

Le dispositif selon l'invention permet de réaliser une détection d'un objet de commande par une couche d'électrodes capacitive gardée, ce qui permet une détection améliorée de l'objet de commande.

En outre, le dispositif selon l'invention permet de réaliser une détection d'un objet de commande quelle que soit la position de la partie rabattable, offrant ainsi à l'utilisateur plus de liberté dans le positionnement de la partie rabattable, et par conséquent pour la commande de son appareil. En effet, avec le dispositif selon l'invention, l'utilisateur peut déclencher une fonction dans l'appareil utilisateur, quelle que soit la position de la partie mobile.

Préférentiellement, les couches de détection sont non coplanaires, chacune des couches de détection formant un plan sensiblement parallèle au plan défini par la partie rabattable et/ou au plan défini par au moins une autre couche de détection.

Les électrodes d'au moins une, préférentiellement chaque, couche de détection peuvent réaliser une détection autonome, en mode « self détection » ou une détection en collaborant avec une autre électrode, en mode « mutual détection ».

Dans une version préférée, mais nullement limitative, l'une des couches d'électrodes capacitives est parallèle à une surface de l'appareil utilisateur servant à réaliser un affichage et/ou comportant une dalle munie d'électrodes capacitives, lorsque la partie mobile est rabattue sur l'appareil utilisateur.

Dans une version préférée, mais nullement limitative, la première couche d'électrodes capacitives, est également appelée « couche interne » et est disposée du côté d'une face, dite interne, de la partie rabattable venant en contact avec l'appareil utilisateur lorsque la partie rabattable est rabattue sur l'appareil utilisateur, et la deuxième couche d'électrodes capacitives, est également appelée « couche externe », est disposée du côté d'une face, dite externe, opposée à ladite face interne.

Dans un mode de réalisation particulier, pour au moins une position et/ou au moins un instant donné, les deux couches de détection peuvent être activées en détection. Dans ce cas, pour au moins un instant donné ou au moins une position donnée de la partie rabattable, le dispositif selon l'invention permet de réaliser une détection au niveau des deux faces de la partie rabattable.

Selon un mode de réalisation avantageux, chacune desdites première et deuxième couches peut être activée en détection à tour de rôle, en fonction de la position relative de la partie rabattable par rapport à l'appareil utilisateur, de sorte que pour une position donnée de ladite partie rabattable une seule desdites couches réalise la fonction de détection.

Par exemple, lorsque la partie rabattable est complètement rabattue sur l'appareil, seule la couche externe peut être activée en détection et lorsque la partie rabattable est complètement ouverte seule la couche interne peut être activée en détection. Plus généralement, lorsque la partie rabattable présente un angle β inférieur ou égal à une première valeur seuil prédéterminée seule la couche externe peut être activée en détection, et lorsque la partie rabattable présente un angle β supérieur ou égal à une deuxième valeur seuil prédéterminée seule la couche interne peut être activée en détection.

Bien entendu, les première et deuxième valeurs seuils peuvent être identiques ou différentes. La ou les valeurs seuil peu(ven)t être comprise(s) entre 45° et 135°, et en particulier égale à 90°.

Alternativement, l'activation en détection (respectivement la désactivation en détection) d'au moins une, préférentiellement de chaque, couche de détection peut être réalisée soit par l'utilisateur soit par l'appareil utilisateur ou encore par une interface homme machine, ou plus généralement une application, équipant l'appareil utilisateur. Dans ce cas, l'activation en détection (respectivement la désactivation en détection) est réalisée, non pas en fonction de l'angle de la partie rabattable par rapport à l'appareil utilisateur, mais par l'utilisateur ou par une application équipant l'appareil utilisateur.

Selon une première version de réalisation, le dispositif selon l'invention peut en outre comprendre au moins un plan de garde, agencé entre les première et deuxième couches de détection et mise au potentiel de garde, pour garder au moins une desdites première et deuxième couche de détection lors de la détection d'au moins un objet de commande.

Dans ce cas, le ou chaque plan de garde est disposé entre les couches de détection.

Le dispositif selon l'invention peut comprendre pour chaque couche de détection un plan de garde dédié.

Selon une alternative avantageuse de cette première version de réalisation, le dispositif selon l'invention peut comprendre un unique plan de garde, disposé entre les première et deuxième couches de détection, pour garder chacune desdites couches de détection. Ainsi, avec un seul plan de garde, le dispositif selon l'invention permet de garder deux couches de détection différentes.

Selon une deuxième version de réalisation particulièrement avantageuse et préférée, le dispositif selon l'invention ne comprend pas de plan de garde en plus des couches de détection. Dans cette deuxième version, chacune des première et deuxième couches de détection réalise à tour de rôle :
- soit la fonction de détection ;
- soit une fonction de garde de l'autre desdites couches détection capacitive, en étant mise à un potentiel alternatif (V_{G}), dit de garde ;
la fonction réalisée par chacune desdites couches étant fonction de la position relative de ladite partie rabattable par rapport audit appareil utilisateur.

Ainsi, lorsqu'une des couches de détection est utilisée en détection, l'autre des couches de détection est utilisée comme plan de garde, et vice versa. Dans cette version, le dispositif selon l'invention permet d'éviter l'utilisation d'une couche de garde en plus des couches de détection. Ainsi, le dispositif selon l'invention présente une architecture plus compacte, et est moins complexe et moins couteux à réaliser.

De cette façon, le dispositif selon l'invention adapte et modifie automatiquement les fonctions respectives des couches d'électrodes équipant la partie rabattable, et en particulier la face interne et la face externe de la partie rabattable.

Par exemple, lorsque la partie mobile est rabattue : la couche interne peut être agencée pour réaliser la fonction de garde, et la couche externe peut être agencée pour réaliser la fonction de détection, et lorsque la partie mobile est ouverte et atteint un angle supérieur à un angle prédéterminé par rapport à une surface de l'appareil : la couche interne peut être agencée pour réaliser la fonction de détection, et la couche externe peut être agencée pour réaliser la fonction de garde.

Autrement dit, et plus généralement, la couche interne et la couche externe peuvent être agencées de sorte que la fonction réalisée par chaque couche est choisie en fonction de l'angle β entre la partie mobile et l'appareil utilisateur, telle que :
- lorsque β est inférieur à une première valeur prédéterminée, la couche interne réalise une fonction de garde et la couche externe réalise une fonction de détection, et
- lorsque β est supérieur à une deuxième valeur prédéterminée, la couche interne réalise une fonction de détection et la couche externe réalise une fonction de garde.

Bien entendu, les première et deuxième valeurs seuils peuvent être identiques ou différentes. La ou les valeurs seuil peu(ven)t être comprise(s) entre 45° et 135°, et en particulier égale à 90°.

Alternativement, l'activation (respectivement la désactivation) en détection ou en garde, d'au moins une, préférentiellement de chaque, couche de détection peut être réalisée soit par l'utilisateur soit par l'appareil utilisateur ou encore par une interface homme machine, ou plus généralement une application, équipant l'appareil utilisateur. Dans ce cas, les fonctions (détection ou garde) de chaque couche sont décidées, non pas en fonction de l'angle de la partie rabattable par rapport à l'appareil utilisateur, mais par l'utilisateur ou par une application équipant l'appareil utilisateur.

Avantageusement, les électrodes respectives de chaque couche peuvent être agencées de sorte à se recouvrir sensiblement. Il peut avantageusement en être de même pour les pistes de liaison respectives de chaque couche de détection qui doivent sensiblement se recouvrir.

Le dispositif selon l'invention peut en outre comprendre avantageusement, au moins un moyen de commande, pour déterminer, en fonction de la position de la partie rabattable, laquelle des couches d'électrodes de la partie rabattable doit réaliser la fonction détection et pour activer en mode mesure les électrodes de ladite couche de détection.

Lorsque l'autre couche de détection est utilisée comme garde pour garder la couche activée en détection, le moyen de commande peut en outre être agencé pour commander la mise au potentiel de garde des électrodes de l'autre couche d'électrodes pour que cette dernière réalise la fonction de garde.

Avantageusement, le moyen de commande peut être couplé à, ou comprendre, un moyen de détection/mesure de la position de la partie rabattable, tel que par exemple un moyen de mesure de l'angle entre la partie rabattable et l'appareil utilisateur.

Le moyen de détection peut être réalisé par, ou comprendre au moins, une électrode, située sur la surface intérieure de la partie rabattable et en particulier au moins une des électrodes de la couche de détection interne, visant l'appareil utilisateur et agencée pour mesurer la distance entre l'appareil utilisateur et ladite partie rabattable. Ainsi, suivant la distance mesurée par une telle électrode, il est possible de déterminer la position de la partie rabattable.

Alternativement, si l'appareil mobile est munie d'une couche d'électrodes de détection, par exemple agencée dans/sous un écran d'affichage, il est également possible d'utiliser au moins une électrode de la couche de détection dudit appareil pour déterminer la position de la partie rabattable. Pour cela il suffit d'activer les électrodes mesurant la distance entre la partie rabattable et l'appareil utilisateur et de désactiver les électrodes visées, au moins pendant le temps de mesure, ou d'utiliser des fréquences d'excitation différentes sur les différentes couches pour que les électrodes de plusieurs couches de détection ne se perturbent pas.

Avantageusement, au moins une couche d'électrodes est agencée pour réaliser une détection d'au moins un objet de commande avec ou sans contact. De cette façon, le dispositif selon l'invention réalise une fonction de détection de commande capacitive qui peut être de type « multi-touches » (« multi touch ») et/ou «sans contact » (multi touchless).

Le dispositif selon l'invention peut être amovible et comprendre, au moins un moyen de connexion à l'appareil utilisateur.

Ce moyen de connexion peut être agencé pour réaliser une connexion filaire ou sans fil avec l'appareil utilisateur.

Selon un exemple de réalisation nullement limitatif, le moyen de connexion peut, par exemple, être intégré dans une partie de coque du dispositif selon l'invention, reliée à la partie rabattable et agencée pour être substituée à ou disposée sur une coque arrière de l'appareil utilisateur.

Le dispositif selon l'invention peut alternativement être non amovible et faire partie intégrante de l'appareil utilisateur.

Dans un exemple de réalisation préférée, la partie rabattable du dispositif selon l'invention peut comprendre une zone transparente laissant un accès visuel à une zone de l'appareil utilisateur tel qu'un écran d'affichage ou une partie d'un écran d'affichage. Ainsi, il est possible de visualiser un écran d'affichage de l'appareil utilisateur tout en interagissant avec l'appareil utilisateur par l'intermédiaire du dispositif selon l'invention, sans avoir à ouvrir la partie rabattable.

Lorsque le dispositif selon l'invention est mis en oeuvre pour un appareil utilisateur comprenant un écran d'affichage, la partie rabattable, et en particulier la zone transparente de la partie rabattable, peut être configurée pour être positionnée sur ou contre ledit écran lorsqu'elle est rabattue.

Dans ce cas au moins une, préférentiellement chaque, couche de détection peut comprendre, au niveau de ladite zone transparente, des électrodes réalisées en un matériau transparent, par exemple en technologie ITO « Indium Tin Oxide », pour conserver la transparence visuelle au niveau de la zone transparente.

Alternativement, la zone transparente peut ne pas être munie d'électrodes.

La partie rabattable peut alternativement ou en plus comprendre une zone opaque. Dans ce cas, au moins une, préférentiellement chacune, des couches de détection peut comprendre, au niveau de ladite zone opaque, des électrodes réalisées en technologie PCB « Printed Circuit Board ».

Dans une configuration particulière d'un accessoire selon l'invention, la partie rabattable faisant capot est agencée pour procurer en mode déployé une zone de détection capacitive sensiblement dans le prolongement de l'écran de l'appareil utilisateur. Cette configuration procure notamment à l'utilisateur une faculté de commande sans contact de type « Joystick » recherchée pour certains jeux sur console.

Avantageusement, la partie rabattable présente une épaisseur supérieure ou égale à 0.5mm.,

Suivant un autre aspect de l'invention, il est proposé un appareil portable électronique et/ou informatique comprenant un dispositif accessoire selon l'invention.

Cet appareil portable selon l'invention peut être pourvu d'une coque arrière qui est avantageusement substituée par une partie de coque arrière d'un dispositif accessoire selon l'invention.

L'appareil portable peut comprendre un écran d'affichage et la partie rabattable du dispositif selon l'invention peut être positionnée de sorte à se rabattre au moins en partie sur ledit écran d'affichage.

L'appareil selon l'invention peut être un ordinateur, un téléphone ou Smartphone, une console de jeu, un PDA, une tablette tactile, etc.

### Description des figures et modes de réalisation

D'autres avantages et caractéristiques apparaîtront à l'examen de la description détaillée d'exemples nullement limitatifs, et des dessins annexés sur lesquels :
- les FIGURES 1-3 sont des représentations schématiques d'un dispositif selon l'invention dans trois configurations différentes ;
- les FIGURES 4-6 sont des représentations schématiques, selon une vue de coupe, de trois exemples de réalisation d'une partie rabattable d'un dispositif selon l'invention ;
- la FIGURE 7 est une représentation schématique d'un module de contrôle pour un dispositif selon l'invention ;
- la FIGURE 8 est une représentation schématique du fonctionnement de la partie rabattable représentée en FIGURE 6 ; et
- les FIGURES 9-11 sont des représentations schématiques d'un appareil selon l'invention, dans laquelle une partie du dispositif selon l'invention est substituée à une coque arrière dudit appareil utilisateur.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Nous allons maintenant décrire différents exemples d'un appareil électronique/informatique selon l'invention mettant en œuvre différents modes de réalisation d'un dispositif accessoire selon l'invention.

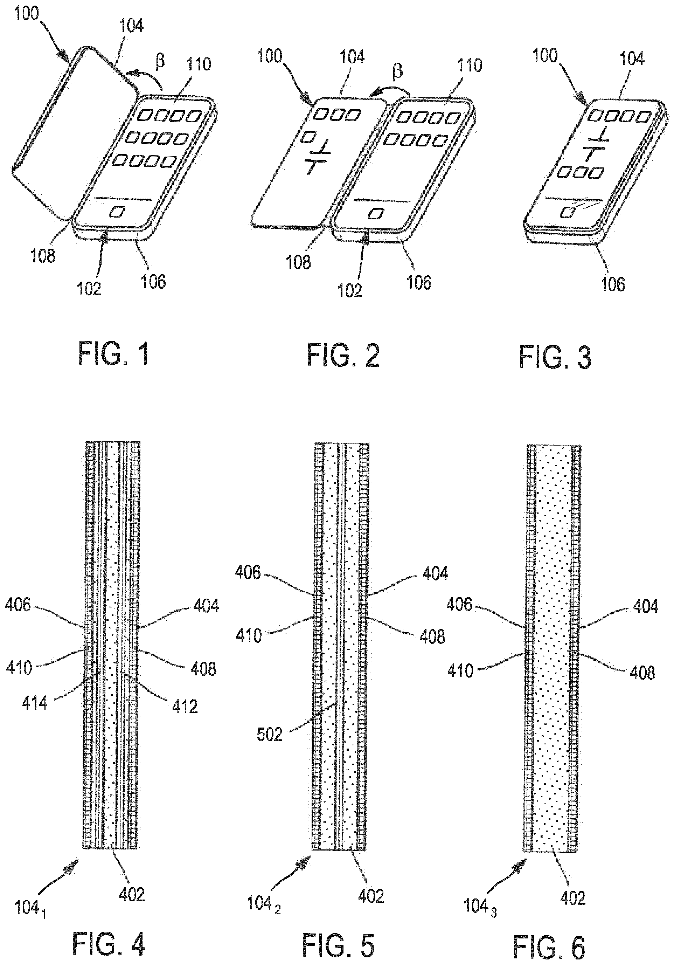

Les FIGURES 1 à 3 sont des représentations schématiques d'un exemple non limitatif d'un dispositif 100 selon l'invention pour un appareil utilisateur 102 tel qu'un Smartphone ® ou une tablette numérique.

Le dispositif 100 se présente sous la forme d'une housse de protection pour l'appareil utilisateur 102 et comprend une partie 104 rabattable par rapport à l'appareil utilisateur et une partie 106 fixe par rapport à l'appareil utilisateur.

La partie fixe 106 fait fonction de coque pour l'arrière de l'appareil utilisateur 102 et enveloppe l'appareil utilisateur 102.

La partie rabattable 104 est reliée mécaniquement à la partie fixe 106 par une liaison souple 108 et peut être mise en rotation autour de cette liaison souple 108 pour être ouverte ou rabattue contre l'appareil utilisateur 102. La partie rabattable 104 est prévue pour couvrir en position rabattue un écran 110 de l'appareil 102. Sur la FIGURE 1, la partie rabattable 104 est ouverte de sorte à former un angle β sensiblement égal à 135° avec le plan formé par l'écran 110 de l'appareil utilisateur 102. Sur la FIGURE 2, la partie rabattable 104 est ouverte de sorte à former un angle β sensiblement égal à 180° avec le plan formé par l'écran 110 de l'appareil utilisateur 102. Sur la FIGURE 3, la partie rabattable 104 est fermée ou rabattue de sorte à former un angle β sensiblement égal à 0° avec le plan formé par l'écran 110 de l'appareil utilisateur 102.

Les FIGURES 4 à 6 sont des représentations schématiques, selon une vue de coupe, de trois exemples de réalisation d'une partie rabattable 104.

Quel que soit le mode de réalisation, la partie rabattable 104 comprend :
- une structure porteuse 402,
- une face intérieure 404 prévue pour venir en contact avec l'appareil utilisateur 102, et plus particulièrement l'écran 110 de l'appareil utilisateur, lorsque la partie rabattable 104 est complètement rabattue, tel que montré en FIGURE 3 ; et
- une face extérieure 406 opposée à la face intérieure 404.

La face intérieure 404 comporte une couche de détection 408, dite interne, formée par un ensemble d'électrodes de détection capacitives (non représentées) et la face extérieure 406 comporte une couche de détection 410, dite externe, formée par un ensemble d'électrodes de détection capacitives (non représentées). Chaque couche de détection 408 et 410 est prévue et agencée pour réaliser une détection avec ou sans contact d'un ou plusieurs objets de commande tel qu'un doigt, une main ou un stylet. Des pistes de liaison (non représentées) sont associées à chacune des couches de détection 408 et 410.

Lorsque la partie rabattable comporte une zone transparente réalisée dans un matériau transparent, les électrodes de chacune des couches de détection 408 et 410 et les pistes de liaison qui se trouvent au niveau de la zone de transparente, sont réalisées selon la technologie ITO (« Indium Tin Oxide »). Lorsque la partie rabattable 102 est entièrement opaque, les électrodes de détection et les pistes de liaison sont réalisées avec des technologies de type PCB (« Printed Circuit Board »), souples ou rigides, noyées ou non dans un diélectrique de protection.

Dans l'exemple représenté sur la FIGURE 4, la partie rabattable 104₁ comporte en outre un plan de garde 412, dite interne, associé à la couche de détection interne 408 et prévu pour garder les électrodes de ladite couche interne 408 lorsque cette dernière est utilisée pour détecter un ou des objets de commande. La partie rabattable 104₁ comporte également un plan de garde 414, dite externe, associé à la couche de détection externe 410 et prévu pour garder les électrodes de ladite couche externe 410 lorsque cette dernière est utilisée pour détecter un ou des objets de commande. Chaque plan de garde 412 et 414 est mis à un potentiel de garde alternatif V_{G}, d'une fréquence donnée.

Dans l'exemple représenté sur la FIGURE 5, la partie rabattable 104₂ comporte un plan de garde 502 unique et commune aux couches de détection interne 408 et externe 410. Ce plan de garde unique 502 est mis à un potentiel de garde alternatif V_{G}, d'une fréquence donnée, et permet de garder chacune des couches de détection 408 et 410.

Dans l'exemple représenté sur la FIGURE 6, la partie rabattable 104₃ comporte uniquement les couches de détection interne 408 et 410 et ne comporte pas de plan de garde en plus de ces couches de détection 408 et 410. Dans ce mode de réalisation, lorsqu'une des couches de détection 408 et 410 est utilisée en détection, l'autre des couches de détection 410 et 408 est utilisée pour former une garde en étant mise à un potentiel de garde et ainsi garder la couche de détection activée en détection.

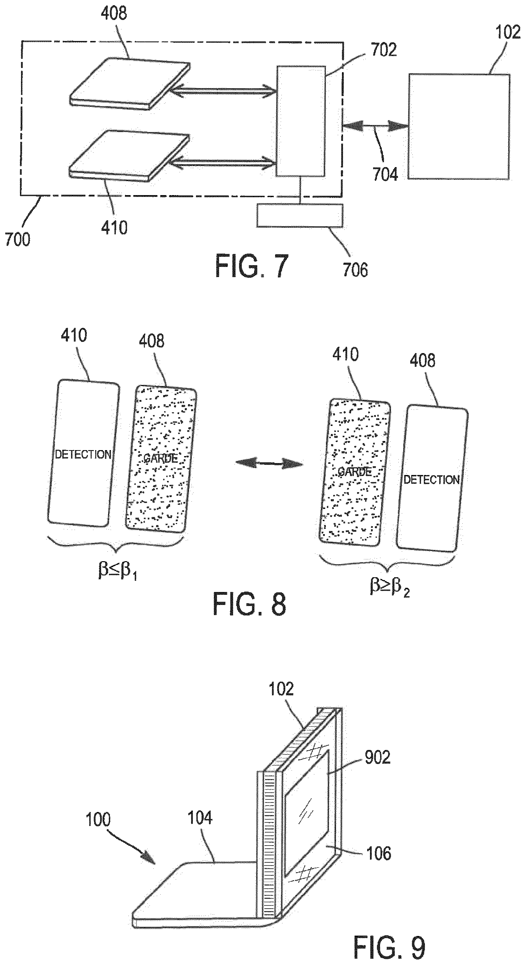

La FIGURE 7 est une représentation schématique sous la forme d'un diagramme d'un exemple de module de contrôle et de commande d'un dispositif selon l'invention, contrôler les composants de la partie rabattable.

Le module 700 représenté sur la FIGURE 7 comprend une unité de contrôle 702 en communication avec l'appareil utilisateur 102 grâce à un moyen de communication 704 filaire ou sans fil.

Le module 700 comprend ou est associé avec un ou plusieurs capteurs 706, tel qu'un ou des capteurs optiques, capacitifs, mécaniques ou magnétiques mesurant un angle, une distance ou un déplacement permettant de déterminer la position relative de la partie rabattable 102 par rapport à l'appareil utilisateur 102.

L'unité de commande est configuré pour recevoir des signaux d'une part de l'appareil utilisateur 104 et des capteurs 706, traiter les signaux reçus et commander les couches de détection 408 et 410 et éventuellement des plans de garde 412, 414 et 502.

De plus, l'unité de contrôle 702 est également configurée pour recevoir des signaux de chacune des couches de détection 408 et 410 et renseigner l'appareil utilisateur 102 de la ou des positions du ou des objets de commande détectées par chacune des couches de détection 408 et 410.

Nous allons maintenant décrire le fonctionnement de l'unité de commande 702, lorsque le dispositif comprend la partie rabattable 104₁ représentée sur la FIGURE 4.

Dans une première variante, l'unité de commande 702 peut activer les couches interne 408 et externe 410 en détection à tout moment : dans ce cas, les couches 408 et 410 réalisent une fonction détection d'un ou plusieurs objets de commande quelle que soit la position relative de la partie rabattable 104₁ par rapport à l'appareil utilisateur 102. Dans cette première variante les plans de garde 412 et 414 sont également activés à tout moment et réalisent la fonction de garde.

Dans une deuxième variante, l'activation des couches de détection 408 et 410 est réalisée en fonction de la position relative de la partie rabattable 104₁ par rapport à l'appareil utilisateur. Dans cette variante, en fonction de la position relative de la partie rabattable 104₁ par rapport à l'appareil utilisateur chacune des couches de détection 408 et 410 est activée ou non. Plus généralement :
- lorsque la partie rabattable 104₁ présente un angle β inférieur ou égal à une première valeur seuil β₁ prédéterminée, l'unité de commande 700 désactive la couche interne 408 et seule la couche externe 410 est activée en détection ; et
- lorsque la partie rabattable 104₁ présente un angle β supérieur ou égal à une deuxième valeur seuil β₂ prédéterminée, la couche externe 410 est désactivée et seule la couche interne est activée en détection.

Les plans de garde 412 et 414 associés respectivement à la couche interne 408 et à la couche externe, peuvent être activées et désactivées en même temps que la couche à laquelle elles sont associées.

Bien entendu, la première valeur seuil β₁ peut être identique, supérieure ou inférieure à la deuxième valeur seuil β₂. Chaque valeur seuil est comprise entre 45° et 135°, et en particulier égale à 90°.

Nous allons maintenant décrire le fonctionnement de l'unité de commande 702, lorsque le dispositif comprend la partie rabattable 104₂ représentée sur la FIGURE 5.

Pour contrôler la partie rabattable 104₂, l'unité de commande 702 peut mettre en œuvre les deux variantes de contrôle décrites ci-dessus pour la partie rabattable 104₁, à la différence que, le plan de garde unique 502 est activé lorsqu'au moins une des couches de détection 408 et 410 est activée.

Nous allons maintenant décrire le fonctionnement de l'unité de commande 702, lorsque le dispositif comprend la partie rabattable 104₃ représentée sur la FIGURE 6.

L'unité de contrôle 702 commande les deux couches de détection 408 et 410, soit en fonction « détection capacitive », soit en fonction « garde électrostatique ». Ainsi, chacune des deux faces 404 et 406 de la partie rabattable 104₃ est alternativement une face de détection et une face de garde, en fonction de la position de la partie rabattable 104₃, tel que représenté à la FIGURE 8.

Ainsi, lorsqu'une des couches de détection est utilisée en détection, l'autre des couches de détection est utilisée comme plan de garde, et vice versa. Par exemple, lorsque la partie mobile 104₃ est rabattue : la couche interne 408 est commandée pour réaliser la fonction de garde en étant mise au potentiel de garde par l'unité de commande 702, et la couche externe 410 est commandée pour réaliser la fonction de détection, et lorsque la partie mobile 104₃ est ouverte et atteint un angle supérieur à un angle prédéterminé par rapport à une surface de l'appareil 102 : la couche interne 408 est commandée pour réaliser la fonction de détection, et la couche externe 410 est commandée pour réaliser la fonction de garde en étant mise par l'unité de contrôle 702 au potentiel de garde.

Autrement dit, et plus généralement, la couche interne 408 et la couche externe 410 sont agencées de sorte que la fonction réalisée par chaque couche est choisie en fonction de l'angle β entre la partie rabattable 104₃ et l'appareil utilisateur 102, telle que :
- lorsque β est inférieur à une première valeur β₁ prédéterminée, la couche interne 408 réalise une fonction de garde et la couche externe 410 réalise une fonction de détection, et
- lorsque β est supérieur à une deuxième valeur β₂ prédéterminée, la couche interne 408 réalise une fonction de détection et la couche externe 410 réalise une fonction de garde.

Bien entendu, les première et deuxième valeurs seuils peuvent être identiques ou différentes. La ou les valeurs seuil peu(ven)t être comprise(s) entre 45° et 135°, et en particulier égale à 90°.

De manière générale, dans tous les modes de réalisation décrits, lorsqu'une couche de détection n'est pas utilisée/activée en détection, par exemple parce qu'elle est désactivée ou activée en garde, au moins une des électrodes de cette couche peut être utilisée de manière ponctuelle, sur demande ou à une fréquence prédéterminée, pour détecter la présence d'objets en face de la surface associée à ladite couche de détection, le type de l'objet détecté (par exemple une table lorsqu'il s'agit de la surface extérieure, un écran d'affichage lorsqu'il s'agit de la surface intérieure, etc.).

Nous allons maintenant décrire un appareil utilisateur selon l'invention.

Les FIGURES 9-11 sont des représentations schématiques d'un exemple de réalisation d'un appareil selon l'invention muni d'un dispositif selon l'invention comprenant une partie fixe venant remplacer une coque arrière de l'appareil portable.

Le dispositif 100 équipant l'appareil 102 comprend une partie fixe 106 agencée pour venir se substituer à une coque arrière équipant normalement l'appareil portable utilisateur portable 102.

Cette partie fixe 106 comprend un dispositif de connexion 902 prévu pour être encastré dans l'appareil portable 102 et réaliser les connexions électriques nécessaires pour interfacer les couches de détection 408 et 410 de la partie rabattable 104 de l'accessoire 100 avec le ou les modules de contrôle et de traitement de l'appareil portable 102. Le dispositif 100 se présente donc sous la forme d'un accessoire qui fait partie intégrante de l'appareil portable 102 auquel il procure des fonctions supplémentaires de détection capacitive.

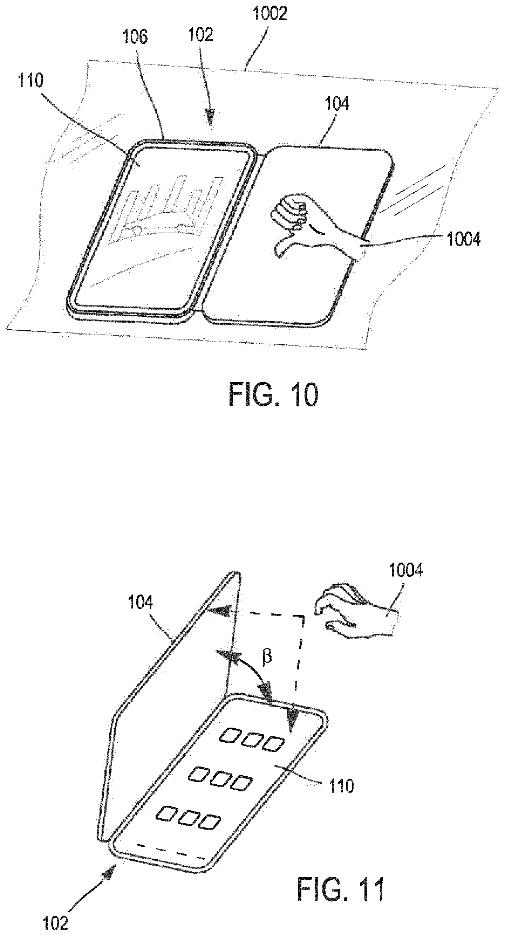

La FIGURE 10 donne une représentation de l'appareil 102 de la FIGURE 9, posé sur une surface 1002, telle qu'une table, la partie rabattable 104 étant ouverte de façon à obtenir un ensemble clavier tactile-écran qui permet d'effectuer des commandes de type « hovering » (« vol sur place ») pour des jeux, par exemple directement avec la main 1004 ou le doigt de l'utilisateur. Ces commandes peuvent inclure une commande « Joystick » par inclinaison de la main 1004 d'un utilisateur au-dessus de la partie rabattable 104 pour diriger un objet visualisé sur l'écran 110, et ce sans cacher l'écran avec la main 1004.

La FIGURE 11 donne une représentation de l'appareil 102 de la FIGURE 9, posé sur une surface 1002, telle qu'une table, la partie rabattable 104 formant un angle β supérieur ou égal à 90° avec l'écran 110 de l'appareil 102.

L'écran 110 de l'appareil utilisateur 102 est muni d'une couche/dalle de détection capacitive pour détecter avec et/ou sans contact un ou plusieurs objets de commande, tel qu'une main avec un ou plusieurs doigts en direction de la surface concernée.

La détection de la main 1004 à la fois par la couche interne et par la couche de détection de l'écran d'affichage 110 permet de réaliser un volume de détection formé entre la partie rabattable 104 et l'écran d'affichage 110. Bien sûr, l'invention n'est pas limitée aux exemples qui viennent d'être décrits et de nombreux aménagements peuvent être apportés à ces exemples sans sortir du cadre de l'invention.

## Revendications

1. Dispositif de saisie pour un appareil utilisateur portable électronique ayant une pluralité de régions de détection d'objet, le dispositif de saisie comprenant :
au moins un substrat ; et
une pluralité de couches formées avec le au moins un substrat, une première couche de la pluralité de couches formées le long d'une première région du au moins un substrat et une seconde couche de la pluralité de couches formées le long d'une seconde région du au moins un substrat ;
dans lequel au moins l'une des première et seconde couches peut être configurée comme couche de détection d'objet et au moins une autre de la pluralité de couches peut être configurée comme plan de garde pour protéger la couche de détection d'objet.

2. Dispositif de saisie selon la revendication 1, dans lequel une troisième couche de la pluralité de couches est disposée entre les première et deuxième couches, la troisième couche pouvant être configurée comme premier plan de garde.

3. Dispositif de saisie selon la revendication 2, dans lequel une quatrième couche de la pluralité de couches est disposée entre la troisième couche et la deuxième couche, la quatrième couche pouvant être configurée comme deuxième plan de garde.

4. Dispositif de saisie selon la revendication 1, dans lequel la première couche peut être configurée comme couche de détection d'objet et la seconde couche peut être configurée comme plan de garde.

5. Dispositif de saisie selon la revendication 1, dans lequel chacune des première et seconde couches est configurable de telle sorte que l'une des première et seconde couches est configurable comme couche de détection d'objet tandis que l'autre des première et seconde couches est configurable comme plan de garde.

6. Dispositif de saisie selon la revendication 1, dans lequel l'une au moins des première et seconde couches peut être configurée comme couche de détection d'objet et l'au moins autre de la pluralité de couches peut être configurée comme plan de garde en fonction d'un angle du dispositif de saisie par rapport à l'appareil.

7. Dispositif de saisie selon la revendication 1, dans lequel l'une au moins des première et seconde couches peut être configurée comme couche de détection d'objet et l'au moins autre de la pluralité de couches peut être configurée comme plan de garde en fonction d'une position relative du dispositif de saisie par rapport à l'appareil.

8. Dispositif de saisie selon la revendication 1, dans lequel l'une au moins des première et seconde couches peut être configurée comme couche de détection d'objet et l'au moins autre de la pluralité de couches peut être configurée comme plan de garde en fonction du déplacement du dispositif de saisie par rapport à l'appareil.

9. Dispositif de saisie selon la revendication 1, dans lequel le dispositif de saisie est couplé à une unité de commande couplée à un ou plusieurs capteurs, le ou les capteurs étant configurés pour détecter un angle du dispositif de saisie par rapport à l'appareil, l'unité de commande étant capable de configurer au moins l'une des première et seconde couches comme couche de détection d'objet et de configurer au moins une autre couche de la pluralité de couches comme plan de garde pour protéger la couche de détection d'objet sur la base de l'angle détecté.

10. Procédé pour fournir une saisie d'utilisateur, pour un appareil utilisateur portable électronique comprenant:
former une pluralité de couches conductrices avec au moins un substrat, une première couche de la pluralité de couches conductrices formées le long d'une première région du au moins un substrat et une seconde couche de la pluralité de couches conductrices formées le long d'une seconde région du au moins un substrat ;
configurer au moins l'une des première et deuxième couches comme couche de détection d'objets ; et
configurer au moins une autre couche de la pluralité de couches conductrices comme plan de garde pour protéger la couche de détection d'objet.

11. Procédé selon la revendication 10, comprenant en outre :
former une troisième couche de la pluralité de couches conductrices entre les première et deuxième couches ; et
configurer la troisième couche comme premier plan de garde.

12. Procédé selon la revendication 11, comprenant en outre:
former une quatrième couche de la pluralité de couches conductrices entre la troisième couche et la deuxième couche ; et
configurer la quatrième couche comme deuxième plan de garde.

13. Procédé selon la revendication 10, comprenant en outre configurer la première couche comme couche de détection d'objet et configurer la seconde couche comme plan de garde.

14. Procédé selon la revendication 10, dans lequel chacune des première et seconde couches est configurable de telle sorte que l'une des première et seconde couches est configurable comme couche de détection d'objet tandis que l'autre des première et seconde couches est configurable comme plan de garde.

15. Procédé selon la revendication 10, comprenant en outre configurer au moins une des première et seconde couches comme couche de détection d'objet et configurer au moins une autre de la pluralité de couches comme plan de garde en fonction d'un angle du dispositif de saisie par rapport à l'appareil.

## Patentansprüche

1. Eine Eingabevorrichtung für eine tragbare elektronische Benutzervorrichtung mit einer Vielzahl von Objekterfassungsbereichen, wobei die Eingabevorrichtung umfasst:
mindestens ein Substrat; und
eine Vielzahl von Schichten, die mit dem mindestens einen Substrat gebildet sind, wobei eine erste Schicht der Vielzahl von Schichten entlang eines ersten Bereichs des mindestens einen Substrats gebildet ist und eine zweite Schicht der Vielzahl von Schichten entlang eines zweiten Bereichs des mindestens einen Substrats gebildet ist;
wobei mindestens eine der ersten und zweiten Schichten als eine Objekterfassungsschicht konfigurierbar ist und mindestens eine andere der Vielzahl von Schichten als eine Schutzschicht zur Abschirmung der Objekterfassungsschicht konfigurierbar ist.

2. Eingabevorrichtung nach Anspruch 1, wobei eine dritte Schicht der Vielzahl von Schichten zwischen den ersten und den zweiten Schichten angeordnet ist, wobei die dritte Schicht als eine erste Schutzschicht konfigurierbar ist.

3. Eingabevorrichtung nach Anspruch 2, wobei eine vierte Schicht der Vielzahl von Schichten zwischen der dritten Schicht und der zweiten Schicht angeordnet ist, wobei die vierte Schicht als eine zweite Schutzschicht konfigurierbar ist.

4. Eingabevorrichtung nach Anspruch 1, wobei die erste Schicht als Objekterfassungsschicht und die zweite Schicht als Schutzschicht konfigurierbar ist.

5. Eingabevorrichtung nach Anspruch 1, wobei jede der ersten und zweiten Schichten so konfigurierbar ist, dass eine der ersten und zweiten Schichten als die Objekterfassungsschicht konfigurierbar ist, während die andere der ersten und zweiten Schichten als Schutzschicht konfigurierbar ist.

6. Eingabevorrichtung nach Anspruch 1, wobei die mindestens eine der ersten und zweiten Schichten als Objekterfassungsschicht und die mindestens eine andere der Vielzahl von Schichten als Schutzschicht konfigurierbar ist, in Abhängigkeit von einem Winkel der Eingabevorrichtung in Bezug auf die Vorrichtung konfigurierbar ist.

7. Eingabevorrichtung nach Anspruch 1, wobei die mindestens eine der ersten und zweiten Schichten als Objekterfassungsschicht und die mindestens eine andere der Vielzahl von Schichten als Schutzschicht, in Abhängigkeit von einer relativen Position der Eingabevorrichtung in Bezug auf die Vorrichtung konfigurierbar ist.

8. Eingabevorrichtung nach Anspruch 1, wobei die mindestens eine der ersten und zweiten Schichten als die Objekterfassungsschicht konfigurierbar ist und die mindestens eine andere der Vielzahl von Schichten als Schutzschicht in Abhängigkeit von der Bewegung der Eingabevorrichtung in Bezug auf die Vorrichtung konfigurierbar ist.

9. Eingabevorrichtung nach Anspruch 1, wobei die Eingabevorrichtung mit einer Steuereinheit gekoppelt ist, die mit einem oder mehreren Sensoren gekoppelt ist, wobei der eine oder die mehreren Sensoren zum Erfassen eines Winkels der Eingabevorrichtung in Bezug auf die Vorrichtung konfiguriert sind, wobei die Steuereinheit in der Lage ist, mindestens eine der ersten und zweiten Schichten als Objekterfassungsschicht zu konfigurieren und mindestens eine andere der Vielzahl von Schichten als Schutzschicht zum Abschirmen der Objekterfassungsschicht auf der Grundlage des erfassten Winkels zu konfigurieren.

10. Verfahren zum Bereitstellen einer Benutzereingabe für eine tragbare elektronische Benutzervorrichtung, umfassend:
Bilden einer Vielzahl von leitfähigen Schichten mit mindestens einem Substrat, wobei eine erste Schicht der Vielzahl von leitfähigen Schichten entlang eines ersten Bereichs des mindestens einen Substrats gebildet wird und eine zweite Schicht der Vielzahl von leitfähigen Schichten entlang eines zweiten Bereichs des mindestens einen Substrats gebildet wird;
Konfigurieren von mindestens einer der ersten und zweiten Schichten als Objekterfassungsschicht; und
Konfigurieren mindestens einer anderen Schicht der Vielzahl von leitenden Schichten als Schutzschicht zum Abschirmen der Objekterfassungsschicht.

11. Verfahren nach Anspruch 10, ferner umfassend:
Bilden einer dritten Schicht aus der Vielzahl von leitenden Schichten zwischen den ersten und den zweiten Schichten; und
Konfigurieren der dritten Schicht als erste Schutzschicht.

12. Verfahren nach Anspruch 11, ferner umfassend:
Bilden einer vierten Schicht aus der Vielzahl von leitenden Schichten zwischen der dritten Schicht und der zweiten Schicht; und
Konfigurieren der vierten Schicht als zweite Schutzschicht.

13. Verfahren nach Anspruch 10, ferner umfassend Konfigurieren der ersten Schicht als Objekterfassungsschicht und Konfigurieren der zweiten Schicht als Schutzschicht.

14. Verfahren nach Anspruch 10, wobei jede der ersten und der zweiten Schichten so konfigurierbar ist, dass eine der ersten und zweiten Schichten als Objekterfassungsschicht konfigurierbar ist, während die andere der ersten und der zweiten Schichten als Schutzschicht konfigurierbar ist.

15. Verfahren nach Anspruch 10, ferner umfassend Konfigurieren von mindestens einer der ersten und der zweiten Schichten als Objekterfassungsschicht und Konfigurieren von mindestens einer anderen der Vielzahl von Schichten als Schutzschicht in Abhängigkeit von einem Winkel der Eingabevorrichtung in Bezug auf die Vorrichtung.

## Claims

1. An input device for a portable electronical user apparatus having a plurality of object detecting regions, the input device comprising:
at least one substrate; and
a plurality of layers formed with the at least one substrate, a first layer of the plurality of layers formed along a first region of the at least one substrate and a second layer of the plurality of layers formed along a second region of the at least one substrate;
wherein at least one of the first and second layers is configurable as an object detecting layer and at least another of the plurality of layers is configurable as a guard layer for shielding the object detecting layer.

2. The input device of claim 1, wherein a third layer of the plurality of layers is disposed between the first and second layers, the third layer configurable as a first guard layer.

3. The input device of claim 2, wherein a fourth layer of the plurality of layers is disposed between the third layer and the second layer, the fourth layer configurable as a second guard layer.

4. The input device of claim 1, wherein the first layer is configurable as the object detecting layer and the second layer is configurable as the guard layer.

5. The input device of claim 1, wherein each of the first and second layers is configurable such that one of the first and second layers is configurable as the object detecting layer while the other of the first and second layers is configurable as the guard layer.

6. The input device of claim 1, wherein the at least one of the first and second layers is configurable as the object detecting layer and the at least another of the plurality of layers is configurable as the guard layer depending on an angle of the input device with respect to the apparatus.

7. The input device of claim 1, wherein the at least one of the first and second layers is configurable as the object detecting layer and the at least another of the plurality of layers is configurable as the guard layer depending on a relative position of the input device with respect to the apparatus.

8. The input device of claim 1, wherein the at least one of the first and second layers is configurable as the object detecting layer and the at least another of the plurality of layers is configurable as the guard layer depending on movement of the input device with respect to the apparatus.

9. The input device of claim 1, wherein the input device is coupled to a control unit coupled to one or more sensors, the one or more sensors configured for detecting an angle of the input device with respect to the apparatus, the control unit capable of configuring at least one of the first and second layers as an object detecting layer and configuring at least another of the plurality of layers as a guard layer for shielding the object detecting layer based on the detected angle.

10. A method for providing user input for a portable electronical user apparatus, comprising:
forming a plurality of conductive layers with at least one substrate, a first layer of the plurality of conductive layers formed along a first region of the at least one substrate and a second layer of the plurality of conductive layers formed along a second region of the at least one substrate;
configuring at least one of the first and second layers as an object detecting layer; and
configuring at least another of the plurality of conductive layers as a guard layer for shielding the object detecting layer.

11. The method of claim 10, further comprising:
forming a third layer of the plurality of conductive layers between the first and second layers; and
configuring the third layer as a first guard layer.

12. The method of claim 11, further comprising:
forming a fourth layer of the plurality of conductive layers between the third layer and the second layer; and
configuring the fourth layer as a second guard layer.

13. The method of claim 10, further comprising configuring the first layer as the object detecting layer and configuring the second layer as the guard layer.

14. The method of claim 10, wherein each of the first and second layers is configurable such that one of the first and second layers is configurable as the object detecting layer while the other of the first and second layers is configurable as the guard layer.

15. The method of claim 10, further comprising configuring at least one of the first and second layers as the object detecting layer and configuring at least another of the plurality of layers as the guard layer depending on an angle of the input device with respect to the apparatus.
